(19) **Europäisches Patentamt**

**European Patent Office**

**Office européen des brevets**

(11) **EP 0 984 880 B1**

(12) **EUROPÄISCHE PATENTSCHRIFT**

(45) Veröffentlichungstag und Bekanntmachung des Hinweises auf die Patenterteilung:
**30.05.2001 Patentblatt 2001/22**

(21) Anmeldenummer: **97917266.5**

(22) Anmeldetag: **17.03.1997**

(51) Int Cl.$^7$: **B61F 5/22**, G05D 1/08

(86) Internationale Anmeldenummer:
**PCT/DE97/00534**

(87) Internationale Veröffentlichungsnummer:
**WO 97/36774 (09.10.1997 Gazette 1997/43)**

(54) **VERFAHREN ZUR REGELUNG DER ERDBEZOGENEN WAGENKASTENNEIGUNG BEI EINEM SCHIENENFAHRZEUG**

PROCESS FOR REGULATING THE EARTH-RELATED INCLINATION OF THE BODY OF A RAILWAY VEHICLE

PROCEDE DE REGLAGE DE L'INCLINAISON PAR RAPPORT A LA TERRE DE LA CAISSE D'UN WAGON DE VEHICULE FERROVIAIRE

(84) Benannte Vertragsstaaten:
**AT CH DE ES FR GB IT LI SE**

(30) Priorität: **29.03.1996 DE 19612695**

(43) Veröffentlichungstag der Anmeldung:
**15.03.2000 Patentblatt 2000/11**

(73) Patentinhaber: **SIEMENS AKTIENGESELLSCHAFT 80333 München (DE)**

(72) Erfinder:
- **JUNGKUNZ, Clemens D-91056 Erlangen (DE)**
- **MÜLLER, Herbert D-91315 Höchstadt (DE)**
- **RATH, Bernhard D-45966 Gladbeck (DE)**

(56) Entgegenhaltungen:
DE-A- 1 933 893          DE-C- 3 727 768
FR-A- 2 073 005

## Beschreibung

Die Erfindung betrifft ein Verfahren zur Regelung der erdbezogenen Wagenkastenneigung bei einem Schienenfahrzeug.

Bei Kurvenfahrten wirken in Schienenfahrzeugen auf Insassen und Transportgüter infolge der Zentrifugalkraft Querbeschleunigungen, die man aus Komfort- und Sicherheitsgründen gering zu halten versucht, ohne gleichzeitig die Fahrgeschwindigkeit zu Lasten von Fahrtdauer und Transportkapazität unnötig herabzusetzen. Wegen ansteigender Anforderungen wird angestrebt, gleisbautechnische Vorkehrungen (Überhöhung in Kurven) durch Maßnahmen im Schienenfahrzeug selbst zu ergänzen. Durch ein geeignetes Neigen des Wagenkastens läßt sich ein Teil der auf die Passagiere wirkenden Querbeschleunigung mit Hilfe der Schwerkraft neutralisieren. Steuerungen der Wagenkastenneigung relativ zum darunterliegenden Fahrwerk mit dem Ziel, die Querbeschleunigung zu vermindern, sind durch die EP-A-0 557 893 sowie durch die SE-B-442 846 bekannt.

Die EP-A-0 557 893 beschreibt ein System, bei dem die Neigung des Wagenkastens gegenüber dem Drehgestell durch eine Regelung der Querbeschleunigung im Wagenkasten erfolgt. Die Regelung benötigt eine Vorsteuerung, die mittels Kreiselsensoren einen auftretenden Gleisbogen erfaßt. Außerdem ist die Vorgabe eines zusätzlichen Sollwertes für den Winkel zwischen Wagenkasten und Drehgestell erforderlich. Die Güte der Regelung ist im bekannten Fall von der Vorsteuerung abhängig und setzt Kenntnisse über die Bauart der zu befahrenden Gleisbögen voraus.

Die SE-B-442 846 offenbart ein System, bei dem der Sollwert des Winkels zwischen Wagenkasten und Drehgestell aus den Beschleunigungswerten in der Lok sowie aus einem Zusatzsollwert aus der Winkeldifferenz zwischen dem vorderen und dem hinteren Drehgestell ermittelt wird. Dieses Neigesystem ist auf eine bestimmte Geometrie der Gleisbogenüberhöhung abgestimmt. Das System kann einen Gleisüberhöhungsfehler in der Geraden fälschlicherweise als eine Gleisbogenüberhöhung interpretieren, wodurch eine vorzeichenfalsche und deshalb unerwünschte Neigewinkelreaktion ausgelöst wird. Weiterhin kann die vorderste Fahrzeugeinheit aufgrund der langen Verarbeitungszeiten der Beschleunigungssignale nicht optimal geregelt werden.

Durch die WO-A-96 02 027 ist ein Verfahren zur Regelung der erdbezogenen Wagenkastenneigung bei einem Schienenfahrzeug bekannt, bei dem der Istwert der Absolutneigung des Wagenkastens gegenüber der als Inertialsystem betrachteten Erde durch eine im Wagenkasten angeordnete Inertialsensorik gemessen wird. Dieses Verfahren ist zwar sehr genau und ermöglicht eine komfortable Wagenkastenneigung, setzt aber einen relativ hohen Aufwand bei der Sensorik voraus.

Aufgabe der vorliegenden Erfindung ist es deshalb, ein Verfahren zur Regelung der erdbezogenen Wagenkastenneigung bei einem Schienenfahrzeug zu schaffen, das bei gleichbleibender Fahrsicherheit eine Reduzierung der im Schienenfahrzeug installierten Inertialsensoren ermöglicht.

Die Aufgabe wird erfindungsgemäß durch ein Verfahren nach Anspruch 1 gelöst. Vorteilhafte Ausgestaltungen der Erfindung sind jeweils Gegenstand von weiteren Ansprüchen.

Die erfindungsgemäße Lösung beruht auf der Erkenntnis, für die Einstellung der Wagenkastenneigung direkt diejenige physikalische Größe zu verwenden, die den Anteil der Querbeschleunigung, der von der Kurvenfahrt herrührt, kompensieren kann. Diese physikalische Größe ist der Neigungswinkel des Wagenkastens gegenüber der Richtung der Schwerkraft bzw. gegenüber der als horizontal verlaufend angenommenen Erdoberfläche.

Erfindungsgemäß wird dieser Neigungswinkel gegenüber der Erde durch eine Meßeinrichtung, die im Wagenkasten angeordnet ist, ermittelt und über eine Regeleinrichtung auf dem gewünschten Wert gehalten.

Der Sollwert für die Wagenkastenneigung wird dabei aus der Zentrifugalbeschleunigung $a_q$ in der Horizontalebene gebildet, wobei die Zentrifugalbeschleunigung $a_q$ z.B. aus der Winkelgeschwindigkeit $\psi$ um die Hochachse und der Fahrgeschwindigkeit v ermittelt werden kann. Die Hochachse verläuft vorzugsweise parallel zur Schwerkraft. Es ist jedoch auch möglich, für die Ermittlung der Winkelgeschwindigkeit $\psi$ anstelle der erdfesten Hochachse eine dazu nicht orthogonale Achse des Wagenkastens (z.B. seine Hochachse) zu verwenden. Die Winkelgeschwindigkeit um eine derartige Achse muß dann durch Koordinatentransformation in eine Winkelgeschwindigkeit $\psi$ um die erdfeste Hochachse (unter Kenntnis des Winkels zwischen der erdfesten Hochachse und der für die Ermittlung herangezogenen Hochachse) umgerechnet werden.

Bei Verwendung eines in Fahrtrichtung weiter vorn angeordneten Sensors kann die ohnehin kurze Filterzeit des Kreiselsensors vollständig kompensiert werden.

Durch die Bildung des Sollwertes $\varphi^*_{WK}$ für die Wagenkastenneigung aus der Zentrifugalbeschleunigung $a_q$ in der Horizontalebene kann das erfindungsgemäße Verfahren zwischen einer Gleisüberhöhung im Gleisbogen und einem Gleisüberhöhungsfehler in der Geraden zuverlässig unterscheiden. Nur bei einer Bogenfahrt treten Zentrifugalbeschleunigungen auf, deren Anteil $a_q$ in der Horizontalebene unabhängig von der auftretenden Gleisüberhöhung ist. Derartige Zentrifugalbeschleunigungen treten beim Befahren einer Störungsstelle in der Gleisgeraden nicht auf.

Da beim erfindungsgemäßen Verfahren die Gleisüberhöhungen nicht zur Bildung des Sollwertes $\varphi^*_{WK}$ für die Absolutneigung des Wagenkastens gegenüber der als Inertialsystem betrachteten Erde herangezogen werden, erfolgt bei Gleisstörungen, die aus einer unterschiedlichen Höhenlage beider Schienen resultieren, kein ungewolltes Neigen des Wagenkastens. Die Betrachtung der Erde als Inertialsystem ist hierbei aufgrund der physikalischen Gegebenheiten zulässig.

Bei dem Verfahren nach Anspruch 1 wird ein Quasi-Istwert $\varphi'_{WK}$ der Absolutneigung jedes Wagenkastens gegenüber der als Inertialsystem betrachteten Erde gebildet. Hierzu wird zunächst gegenüber Erde ein Absolutneigewinkel $\varphi_{DG}$ des in Fahrtrichtung ersten Fahrwerks bei dem in Fahrtrichtung ersten Wagen ermittelt. Dies kann durch Messung (Anspruch 2) oder durch Berechnung (Anspruch 3) erfolgen. Anschließend wird ein Rollwinkel $\alpha_{sek}$ der Sekundärfederung in wenigstens einem Fahrwerk eines jeden Wagenkastens aus der Zentrifugalbeschleunigung in Horizontalebene und aus der Rollsteifigkeit der jeweiligen Sekundärfederung ermittelt. Der Rollwinkel $\alpha_{sek}$ kann hierbei gemessen (Anspruch 4) oder als Schätzwert vorgegeben werden (Anspruch 5). Weiterhin wird ein Neigewinkel $\alpha_N$ der aktiven Neigemechanik zwischen Wagenkasten und Pendelträger bei wenigstens einem Fahrwerk eines jeden Wagens gemessen.

Bei dem erfindungsgemäßen Verfahren werden ferner der Absolutneigewinkel $\varphi_{DG}$ des in Fahrtrichtung ersten Fahrwerks bei dem in Fahrtrichtung ersten Wagen und die Zentrifugalbeschleunigung $a_q$ in Horizontalebene des in Fahrtrichtung ersten Wagens an die nachfolgenden Wagen fahrgeschwindigkeitsabhängig weitergeschaltet. Anstelle der Zentrifugalbeschleunigung $a_q$ in Horizontalebene kann auch eine dazu äquivalente Größe fahrgeschwindigkeitsabhängig weitergeschaltet werden.

Unter einer zur Zentrifugalbeschleunigung $a_q$ äquivalenten Größe ist aufgrund der Beziehungen

$$1/R = \dot{\psi}/v, \text{ solange } v \neq 0$$

$$a_q = v \cdot \dot{\psi} = v^2/R = \dot{\psi}^2 \cdot R$$

der Gleisradius R oder die Gleiskrümmung 1/R zu verstehen. Hierbei ist $\psi$ die Winkelgeschwindigkeit des Schienenfahrzeugs um das Erdlot (geodätisches Koordinatensystem).

Die Verwendung einer Inertialsensorik bietet gegenüber voneinander unabhängigen Kreisel- und Beschleunigungssensoren den Vorteil, daß die Offset- und Drift-Kompensation der Kreiselsignale automatisch immer gewährleistet ist.

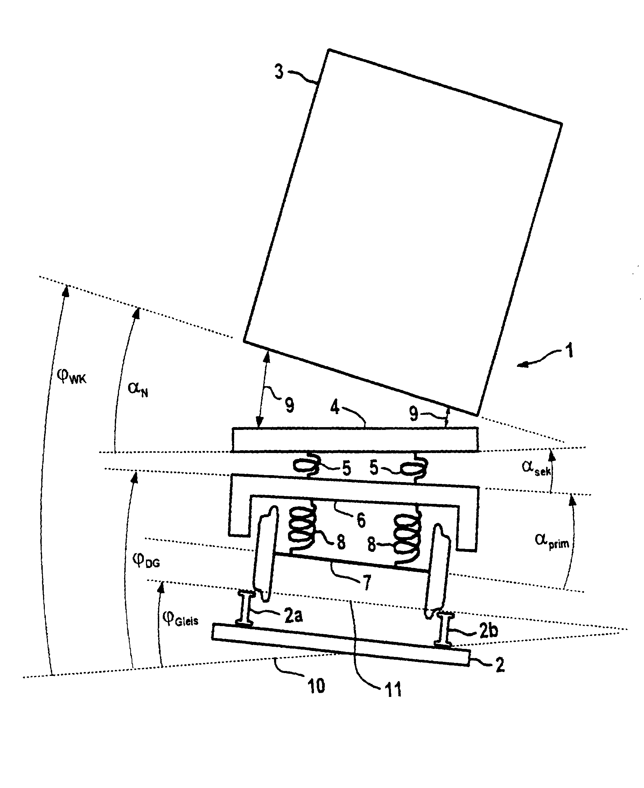

Zur weiteren Erläuterung der Erfindung wird auf die Zeichnung Bezug genommen, in der ein Ausführungsbeispiel des erfindungsgemäßen Verfahrens an einem im Querschnitt gezeigten Wagen eines Schienenfahrzeugs schematisch dargestellt ist.

In der Zeichnung ist mit 1 ein Wagen eines Schienenfahrzeugs bezeichnet, der ein Gleis 2 befährt. Der Wagen 1 umfaßt einen Wagenkasten 3 , der gegenüber zwei Pendelträgern 4 oder dergleichen (z.B. zwei Wiegen) quer zur Fahrtrichtung schwenkbar ist.Von den beiden Pendelträgern 4 ist in der Zeichnung nur der in Fahrtrichtung vordere Pendelträger sichtbar.

Jeder Pendelträger 4 ist über eine Sekundärfederung 5 auf einem als Drehgestell ausgebildeten Fahrwerk 6 abgestützt. Im Drehgestell 6 sind zwei Radpaare 7 angeordnet, von denen in der Zeichnung nur ein Radpaar 7 sichtbar ist.

Die Radpaare 7 sind über Primärfederungen 8 federnd in den Drehgestellen 6 gehalten.

Zwischen den Pendelträgern 4 und dem Wagenkasten 3 ist eine aktive Neigemechanik 9 angeordnet, durch die der Wagenkasten 3 gegenüber den Pendelträgern 4 geneigt werden kann.

Bei einer Kurve ist die kurvenäußere Schiene 2a gegenüber der kurveninneren Schiene 2b, die in der Erdhorizontalen 10 liegt, überhöht. Die Gleisebene 11 ist damit um einen Gleisneigungswinkel $\varphi_{Gleis}$ gegenüber der Erdhorizontalen 10 geneigt.

Bei Kurvenfahrt neigt sich das Drehgestell 6 gegenüber den Radpaaren 7 jeweils um einen Rollwinkel $\alpha_{prim}$ der Primärfederung 8. Gleichzeitig neigt sich der Pendelträger 4 gegenüber dem Drehgestell 6 um einen Rollwinkel $\alpha_{sek}$ der Sekundärfederung 5.

Der Absolutneigewinkel $\varphi_{DG}$ des Drehgestells 6 gegenüber der Erdhorizontalen 10 läßt sich damit z. B. aus der Beziehung

$$\varphi_{DG} = \varphi_{Gleis} + \alpha_{prim}$$

ermitteln.

Weiterhin wird der Neigewinkel $\alpha_N$ zwischen dem Wagenkasten 3 und dem Pendelträger 4 gemessen.

Anschließend wird der Absolutneigewinkel $\varphi_{DG}$ des Drehgestells 6 und die Zentrifugalbeschleunigung $a_q$ in Horizontalebene des Wagens 1 oder eine zur Zentrifugalbeschleunigung $a_q$ äquivalente Größe an die nachfolgenden Wagen fahrgeschwindigkeitsabhängig weitergeschaltet.

Unter einer zur Zentrifugalbeschleunigung $a_q$ äquivalenten Größe ist aufgrund der Beziehungen

$$1/R = \dot{\psi}/v, \text{ solange } v \neq 0$$

$$a_q = v \cdot \dot{\psi} = v^2/R = \dot{\psi}^2 \cdot R$$

der Gleisradius R oder die Gleiskrümmung 1/R zu verstehen. Hierbei ist $\psi$ die Winkelgeschwindigkeit des Schienenfahrzeugs um das Erdlot (geodätisches Koordinatensystem).

Aus der Differenz zwischen Sollwert $\varphi^*_{WK}$ und Istwert $\varphi_{WK}$ der Absolutneigung des Wagenkastens 3 wird anschließend wenigstens ein Regelsignal für die aktive Neigemechanik 9. gebildet. In Abhängigkeit vom gebildeten Regelsignal wird der Winkel $\alpha_N$ zwischen Pendelträger 4 und Wagenkasten 3 quer zur Fahrtrichtung verstellt.

**Patentansprüche**

1. Verfahren zur Regelung der erdbezogenen Wagenkastenneigung bei einem Schienenfahrzeug mit mindestens einem Wagen (1,2), dessen Wagenkasten (3) jeweils wenigstens über eine Primärfederung (8), eine Sekundärfederung (5)und einen Pendelträger (4) federnd und schwenkbar um die Längsachse auf wenigstens einem Fahrwerk (6) mit wenigstens einem Radpaar (7) sitzt, wobei das Verfahren folgende Schritte umfaßt:

   a) Ermittlung der Zentrifugalbeschleunigung ($a_q$) in Horizontalebene des in Fahrtrichtung ersten Wagens (1),
   b) Vorgabe eines von der Fahrsituation abhängigen oberen Grenzwertes für die Querbeschleunigung in der Wagenkastenebene,
   c) Bildung eines Sollwertes ($\varphi^*_{WK}$) für die Absolutneigung jedes Wagenkastens (3) gegenüber der als Inertialsystem betrachteten Erde,
   d) Bildung eines Quasi-Istwertes ($\varphi'_{WK}$) der Absolutneigung jedes Wagenkastens (3) gegenüber der als Inertialsystem betrachteten Erde aus
   d1) einem gegenüber Erde ermittelten Absolutneigewinkel ($\varphi_{DG}$) des in Fahrtrichtung ersten Fahrwerks (6) bei dem in Fahrtrichtung ersten Wagen (1) und
   d2) einem Rollwinkel ($\alpha_{sek}$) der Sekundärfederung (5) in wenigstens einem Fahrwerk (6) eines jeden Wagenkastens (3), wobei der Rollwinkel ($\alpha_{sek}$) aus der Zentrifugalbeschleunigung ($a_q$) in Horizontalebene und aus der Rollsteifigkeit der jeweiligen Sekundärfederung (5) ermittelt wird, und
   d3) einem gemessenen Neigewinkel ($\alpha_N$) zwischen Wagenkasten (3) und Pendelträger (4) bei wenigstens einem Fahrwerk (6) eines jeden Wagens (1), wobei
   e) der Absolutneigewinkel ($\varphi_{DG}$) des in Fahrtrichtung ersten Fahrwerks (6) bei dem in Fahrtrichtung ersten Wagen (1) und die Zentrifugalbeschleunigung ($a_q$) in Horizontalebene des in Fahrtrichtung ersten Wagens (1) oder eine zur Zentrifugalbeschleunigung ($a_q$) äquivalente Größe (R, 1/R) an die nachfolgenden Wagen fahrgeschwindigkeitsabhängig weitergeschaltet werden,
   f) Bildung wenigstens eines Regelsignals aus der Differenz zwischen Sollwert ($\varphi^*_{WK}$) und Istwert ($\varphi_{WK}$) der Absolutneigung des Wagenkastens (3),
   g) Verstellung des Winkels zwischen Pendelträger (4) und Wagenkasten (3) quer zur Fahrtrichtung in Abhängigkeit vom gebildeten Regelsignal.

2. Verfahren nach Anspruch 1,
   **dadurch gekennzeichnet,**
   daß der Absolutneigewinkel ($\varphi_{DG}$) des in Fahrtrichtung ersten Fahrwerks (6) bei dem in Fahrtrichtung ersten Wagen (1) gemessen wird.

3. Verfahren nach Anspruch 1,
   **dadurch gekennzeichnet,**
   daß der Absolutneigewinkel ($\varphi'_{DG}$) des in Fahrtrichtung ersten Fahrwerks (6) bei dem in Fahrtrichtung ersten Wagen (1) aus dem Istwert ($\varphi_{WK}$) der Absolutneigung des ersten Wagenkastens (3) berechnet wird.

4. Verfahren nach Anspruch 1,
   **dadurch gekennzeichnet,**
   daß der Rollwinkel ($\alpha_{sek}$) der Sekundärfederung (5) gemessen wird.

5. Verfahren nach Anspruch 1,
   **dadurch gekennzeichnet,**
   daß der Rollwinkel ($\alpha_{sek}$) der Sekundärfederung (5) als Schätzwert vorgegeben wird.

6. Verfahren nach Anspruch 1,
   **dadurch gekennzeichnet,**
   daß für den in Fahrtrichtung ersten Wagen (1) ein Istwert ($\varphi_{WK}$) der Absolutneigung seines Wagenkastens (3) gemessen wird.

7. Verfahren nach Anspruch 3 und 6,
   **dadurch gekennzeichnet,**
   daß aus dem Istwert ($\varphi_{WK}$) der Absolutneigung des Wagenkastens (3), dem Neigewinkel ($\alpha_N$) des Wagenkastens (3)gegenüber dem Pendelträger (4) und dem Rollwinkel ($\alpha_{sek}$) der Sekundärfederung (5) der Quasi-Absolutneigewinkel ($\varphi'_{DG}$) des Fahrwerks (6) gemäß der Gleichung

$$\varphi'_{DG} = \varphi_{WK} - (\alpha_N + \alpha_{sek})$$

berechnet und als Absolutneigewinkel ($\varphi_{DG}$) des Fahrwerks (6) weiterverarbeitet und fahrgeschwindigkeitsabhängig weitergeschaltet wird.

8. Verfahren nach Anspruch 7,
   **dadurch gekennzeichnet,**
   daß der Gleisneigungswinkel ($\varphi_{Gleis}$) oder der Quasi- Gleisneigungswinkel ($\varphi'_{Gleis}$) aus dem Absolutneigewinkel ($\varphi_{DG}$) des in Fahrtrichtung ersten Fahrwerks (6) bei dem in Fahrtrichtung ersten Wagen (1) sowie aus dem Rollwinkel ($\alpha_{prim}$) der Primärfederung (8) gemäß der Gleichung

$$\varphi_{Gleis} = \varphi_{DG} - \alpha_{prim}$$

berechnet werden, wobei sowohl der Absolutneigewinkel ($\varphi_{DG}$) als auch der Rollwinkel ($\alpha_{prim}$) als Meßgrößen erfaßt werden.

9. Verfahren nach Anspruch 7,
   **dadurch gekennzeichnet,**
   daß der Gleisneigungswinkel ($\varphi_{Gleis}$) oder der Quasi- Gleisneigungswinkel ($\varphi'_{Gleis}$) aus dem Absolutneigewinkel ($\varphi_{DG}$) des in Fahrtrichtung ersten Fahrwerks (6) bei dem in Fahrtrichtung ersten Wagen (1) sowie aus dem Rollwinkel ($\alpha_{prim}$) der Primärfederung (8) gemäß der Gleichung

$$\varphi'_{Gleis} = \varphi_{DG} - \alpha_{prim}$$

   berechnet werden, wobei der Absolutneigewinkel ($\varphi_{DG}$) und/oder der Rollwinkel ($\alpha_{prim}$) als Schätzwerte zur Verfügung gestellt werden.

10. Verfahren nach Anspruch 9,
    **dadurch gekennzeichnet,**
    daß der Rollwinkel ($\alpha_{prim}$) der Primärfederung (8) in wenigstens einem Fahrwerk (6) eines jeden Wagens (1) aus der Zentrifugalbeschleunigung ($a_q$) in Horizontalebene und aus der Rollsteifigkeit der jeweiligen Primärfederung (8) ermittelt wird.

11. Verfahren nach Anspruch 1,
    **dadurch gekennzeichnet**,
    daß zumindest ein Teil der für die Ermittlung der Zentrifugalbeschleunigung ($a_q$) in Horizontalebene notwendigen physikalischen Größen in Fahrtrichtung gesehen vor dem zu neigenden Wagenkasten gemessen werden und daß diese Meßgrößen und/oder wenigstens ein daraus abgeleitetes Signal an den zu neigenden Wagenkasten fahrgeschwindigkeitsabhängig weitergeleitet werden.

12. Verfahren nach Anspruch 1,
    **dadurch gekennzeichnet,**
    daß aus den gemessenen und/oder berechneten Absolutneigungen aller Fahrwerke (6) eines Wagens (1) die Stellsignale zur Verstellung der Winkel zwischen den Fahrwerken (6) und dem Wagenkasten (3) quer zur Fahrtrichtung unter Beachtung eines vorgebbaren oberen Grenzwertes für die Torsion des Wagenkastens (3) um seine Längsachse gebildet werden.

13. Verfahren nach Anspruch 1,
    **dadurch gekennzeichnet,**

daß anstelle der Zentrifugalbeschleunigung ($a_q$) in Horizontalebene eine dazu äquivalente Größe (R, 1/R) benutzt wird.

## Claims

1. Method for regulating the earth-related wagon-body inclination body in a rail vehicle having at least one wagon (1, 2), the wagon body (3) of which, in each case at least by way of a primary spring suspension (8), a secondary spring suspension (5) and a pendulum carrier (4), sits on at least one chassis unit (6) having at least one pair of wheels (7) in a manner such that it is spring-mounted and can pivot about the longitudinal axis, the method comprising the following steps:

   a) determining of the centrifugal acceleration ($a_q$) in the horizontal plane of the first wagon (1) in the direction of travel,
   b) stipulation of an upper limiting value, dependent on the travel situation, for the transverse acceleration in the plane of the wagon body,
   c) formation of a desired value ($\varphi^*_{WK}$) for the absolute inclination of each wagon body (3) with respect to the earth, viewed as inertial frame,
   d) formation of a quasi actual value ($\varphi'_{WK}$) of the absolute inclination of each wagon body (3) with respect to the earth, viewed as inertial frame, from

      d1) an absolute angle of inclination ($\varphi_{DG}$), determined with respect to earth, of the first chassis unit (6), in the direction of travel, in the first wagon in the direction of travel (1), and
      d2) a roll angle ($\alpha_{sek}$) of the secondary spring suspension (5) in at least one chassis unit (6) of each wagon body (3), the roll angle ($\alpha_{sek}$) being determined from the centrifugal acceleration ($a_q$) in the horizontal plane and from the rolling rigidity of the respective secondary spring suspension (5), and
      d3) a measured angle of inclination ($\alpha_N$) between wagon body (3) and pendulum carrier (4) in at least one chassis unit (6) of each wagon (1), wherein

   e) the absolute angle of inclination ($\varphi_{DG}$) of the first chassis unit (6), in the direction of travel, in the first wagon (1) in the direction of travel and the centrifugal acceleration ($a_q$) in the horizontal plane of the first wagon (1) in the direction of travel, or a variable (R, 1/R) equivalent to the centrifugal acceleration ($a_q$), are relayed to the following wagons in a manner dependent on the travelling velocity,

f) formation of at least one regulating signal from the difference between desired value ($\varphi^*_{WK}$) and actual value ($\varphi_{WK}$) of the absolute inclination of the wagon body (3),

g) adjustment of the angle between pendulum carrier (4) and wagon body (3) transversely with respect to the direction of travel as a function of the regulating signal which is formed.

2. Method according to claim 1, characterised in that the absolute angle of inclination ($\varphi_{DG}$) of the first chassis unit (6), in the direction of travel, in the first wagon (1) in the direction of travel is measured.

3. Method according to claim 1, characterised in that the absolute angle of inclination ($\varphi'_{DG}$) of the first chassis unit (6), in the direction of travel, in the first wagon (1) in the direction of travel is calculated from the actual value ($\varphi_{WK}$) of the absolute inclination of the first wagon body (3).

4. Method according to claim 1, characterised in that the roll angle ($\alpha_{sek}$) of the secondary spring suspension (5) is measured.

5. Method according to claim 1, characterised in that the roll angle ($\alpha_{sek}$) of the secondary spring suspension (5) is specified as an estimated value.

6. Method according to claim 1, characterised in that for the first wagon (1) in the direction of travel, an actual value ($\varphi_{WK}$) of the absolute inclination of its wagon body (3) is measured.

7. Method according to claims 3 and 6, characterised in that from the actual value ($\varphi_{WK}$) of the absolute inclination of the wagon body (3), the angle of inclination ($\alpha_N$) of the wagon body (3) with respect to the pendulum carrier (4) and the roll angle ($\alpha_{sek}$) of the secondary spring suspension (5), the quasi absolute angle of inclination ($\varphi'_{DG}$) of the chassis unit (6) is calculated in accordance with the equation

$$\varphi'_{DG} = \varphi_{WK} - (\alpha_N + \alpha_{sek})$$

and processed further as the absolute angle of inclination ($\varphi_{DG}$) of the chassis unit (6) and relayed in a manner dependent on the travelling velocity.

8. Method according to claim 7, characterised in that the track angle of inclination ($\varphi_{Gleis}$) or the quasi track angle of inclination ($\varphi'_{Gleis}$) are calculated from the absolute angle of inclination ($\varphi_{DG}$) of the first chassis unit (6), in the direction of travel, in the first wagon (1) in the direction of travel and also from the roll angle ($\alpha_{prim}$) of the primary spring suspension (8) in accordance with the equation

$$\varphi_{Gleis} = \varphi_{DG} - \alpha_{prim},$$

wherein both the absolute angle of inclination ($\varphi_{DG}$) and also the roll angle ($\alpha_{prim}$) are acquired as measured variables.

9. Method according to claim 7, characterised in that the track angle of inclination ($\varphi_{Gleis}$) or the quasi track angle of inclination ($\varphi'_{Gleis}$) are calculated from the absolute angle of inclination ($\varphi_{DG}$) of the first chassis unit (6), in the direction of travel, in the first wagon (1) in the direction of travel and also from the roll angle ($\alpha_{prim}$) of the primary spring suspension (8) in accordance with the equation

$$\varphi'_{Gleis} = \varphi_{DG} - \alpha_{prim},$$

wherein both the absolute angle of inclination ($\varphi_{DG}$) and/or the roll angle ($\alpha_{prim}$) are made available as estimated values.

10. Method according to claim 9, characterised in that the roll angle ($\alpha_{prim}$) of the primary spring suspension (8) in at least one chassis unit (6) of each wagon (1) is determined from the centrifugal acceleration ($a_q$) in the horizontal plane and from the rolling rigidity of the respective primary spring suspension (8).

11. Method according to claim 1, characterised in that at least a portion of the physical variables necessary for determining the centrifugal acceleration ($a_q$) in the horizontal plane are measured in front of the wagon body to be inclined, seen in the direction of travel, and in that these measured variables and/or at least one signal derived therefrom are relayed to the wagon body to be inclined, in a manner dependent on the travelling velocity.

12. Method according to claim 1, characterised in that there are formed from the measured and/or calculated absolute inclinations of all the chassis units (6) of a wagon (1) the adjusting signals for adjusting the angle between the chassis units (6) and the wagon body (3) transversely with respect to the direction of travel, observing a predeterminable upper limiting value for the torsion of the wagon body (3) about the longitudinal axis thereof.

13. Method according to claim 1, characterised in that instead of the centrifugal acceleration ($a_q$) in the horizontal plane, a variable (R, 1/R) equivalent thereto is used.

## Revendications

**1.** Procédé de réglage de l'inclinaison par rapport à la terre de la caisse de voiture d'un véhicule ferroviaire comprenant au moins une voiture (1, 2) dont la caisse de voiture (3), à chaque fois par au moins une suspension primaire (8), une suspension secondaire (5) et un support basculant (4), est fixée de manière élastique et pivotante autour de l'axe longitudinal sur au moins un châssis (6) avec au moins une paire de roues (7), le procédé comprenant les étapes suivantes :

a) détermination de l'accélération centrifuge ($a_q$) dans le plan horizontal de la première voiture (1) dans le sens de la marche,

b) définition d'une limite supérieure dépendante de la situation de conduite pour l'accélération transversale dans le plan de la caisse de voiture,

c) production d'une valeur théorique ($\varphi^*_{WK}$) pour l'inclinaison absolue de chaque caisse de voiture (3) par rapport à la terre considérée comme système d'inertie,

d) production d'une quasi-valeur réelle ($\varphi'_{WK}$) de l'inclinaison absolue de chaque caisse de voiture (3) par rapport à la terre considérée comme système d'inertie, à partir

d1) d'un angle d'inclinaison absolue ($\varphi_{DG}$) déterminé par rapport à la terre, du premier châssis (6) dans le sens de la marche de la première voiture (1) dans le sens de la marche et

d2) d'un angle de roulis ($\alpha_{sek}$) de la suspension secondaire (5) dans au moins un châssis (6) de chaque caisse de voiture (3), l'angle de roulis ($\alpha_{sek}$) étant déterminé à partir de l'accélération centrifuge ($a_q$) dans le plan horizontal et de la rigidité de roulis de la suspension secondaire (5) respective, et

d3) d'un angle d'inclinaison ($\alpha_N$) mesuré entre la caisse de voiture (3) et le support basculant (4) dans au moins un châssis (6) de chaque voiture (1),

e) l'angle d'inclinaison absolue ($\varphi_{DG}$) du premier châssis (6) dans le sens de la marche de la première voiture (1) dans le sens de la marche et l'accélération centrifuge ($a_q$) dans le plan horizontal de la première voiture (1) dans le sens de la marche ou une grandeur équivalente (R, 1/R) à l'accélération centrifuge ($a_q$) étant transmis aux voitures suivantes en fonction de la vitesse de marche,

f) production d'au moins un signal de réglage à partir de la différence entre la valeur théorique ($\varphi^*_{WK}$) et la valeur réelle ($\varphi_{WK}$) de l'inclinaison absolue de la caisse de voiture (3),

g) ajustage de l'angle entre le support basculant (4) et la caisse de voiture (3) transversalement au sens de la marche en fonction du signal de réglage produit.

**2.** Procédé selon la revendication 1, caractérisé en ce qu'on mesure l'angle d'inclinaison absolue ($\varphi_{DG}$) du premier châssis (6) dans le sens de la marche de la première voiture (1) dans le sens de la marche.

**3.** Procédé selon la revendication 1, caractérisé en ce qu'on calcule l'angle d'inclinaison absolue ($\varphi'_{DG}$) du premier châssis (6) dans le sens de la marche de la première voiture (1) dans le sens de la marche à partir de la valeur réelle ($\varphi_{WK}$) de l'inclinaison absolue de la première caisse de voiture (3).

**4.** Procédé selon la revendication 1, caractérisé en ce qu'on mesure l'angle de roulis ($\alpha_{sek}$) de la suspension secondaire (5).

**5.** Procédé selon la revendication 1, caractérisé en ce qu'on donne l'angle de roulis ($\alpha_{sek}$) de la suspension secondaire (5) comme valeur estimative.

**6.** Procédé selon la revendication 1, caractérisé en ce qu'on mesure pour la première voiture (1) dans le sens de la marche une valeur réelle ($\varphi_{WK}$) de l'inclinaison absolue de sa caisse de voiture (3).

**7.** Procédé selon la revendication 3 et 6, caractérisé en ce qu'à partir de la valeur réelle ($\varphi_{WK}$) de l'inclinaison absolue de la caisse de voiture (3), de l'angle d'inclinaison ($\alpha_N$) de la caisse de voiture (3) par rapport au support basculant (4) et de l'angle de roulis ($\alpha_{sek}$) de la suspension secondaire (5) on calcule le quasi-angle d'inclinaison absolue ($\varphi'_{DG}$) du châssis (6) selon l'équation

$$\varphi'_{DG} = \varphi_{WK} - (\alpha_N + \alpha_{sek})$$

et on le traite ultérieurement comme angle d'inclinaison absolue ($\varphi_{DG}$) du châssis (6) et on le transmet en fonction de la vitesse de marche.

**8.** Procédé selon la revendication 7, caractérisé en ce qu'on calcule l'angle d'inclinaison de voie ($\varphi_{Gleis}$) ou le quasi-angle d'inclinaison de voie ($\varphi'_{Gleis}$) à partir de l'angle d'inclinaison absolue ($\varphi_{DG}$) du premier châssis (6) dans le sens de la marche de la première voiture (1) dans le sens de la marche ainsi qu'à partir de l'angle de roulis ($\alpha_{prim}$) de la suspension primaire (8) selon l'équation

$$\varphi_{Gleis} = \varphi_{DG} - \alpha_{prim},$$

à la fois l'angle d'inclinaison absolue ($\varphi_{DG}$) et l'angle de roulis ($\alpha_{prim}$) étant pris comme grandeurs mesurées.

9. Procédé selon la revendication 7, caractérisé en ce qu'on calcule l'angle d'inclinaison de voie ($\varphi_{Gleis}$) ou le quasi-angle d'inclinaison de voie ($\varphi'_{Gleis}$) à partir de l'angle d'inclinaison absolue ($\varphi_{DG}$) du premier châssis (6) dans le sens de la marche de la première voiture (1) dans le sens de la marche ainsi qu'à partir de l'angle de roulis ($\alpha_{prim}$) de la suspension primaire (8) selon l'équation

$$\varphi'_{Gleis} = \varphi_{DG} - \alpha_{prim},$$

l'angle d'inclinaison absolue ($\varphi_{DG}$) et/ou l'angle de roulis ($\alpha_{prim}$) étant fournis comme valeurs estimatives.

10. Procédé selon la revendication 9, caractérisé en ce qu'on détermine l'angle de roulis ($\alpha_{prim}$) de la suspension primaire (8) dans au moins un châssis (6) de chaque voiture (1) à partir de l'accélération centrifuge ($a_q$) dans le plan horizontal et à partir de la rigidité de roulis de la suspension primaire (8) respective.

11. Procédé selon la revendication 1, caractérisé en ce qu'on mesure au moins une partie des grandeurs physiques nécessaires à la détermination de l'accélération centrifuge ($a_q$) dans le plan horizontal, avant la caisse de voiture à incliner vu dans le sens de la marche et en ce qu'on transmet ces grandeurs mesurées et/ou au moins un signal qui en est dérivé, à la caisse de voiture à incliner en fonction de la vitesse de marche.

12. Procédé selon la revendication 1, caractérisé en ce qu'on produit à partir des inclinaisons absolues mesurées et/ou calculées de tous les châssis (6) d'une voiture, les signaux de réglage pour l'ajustage des angles entre les châssis (6) et la caisse de voiture (3) transversalement au sens de la marche, en respectant une limite supérieure définissable pour la torsion de la caisse de voiture (3) autour de son axe longitudinal.

13. Procédé selon la revendication 1, caractérisé en ce qu'on utilise à la place de l'accélération centrifuge ($a_q$) dans le plan horizontal une grandeur équivalente (R, 1/R).